(19) Europäisches Patentamt / European Patent Office / Office européen des brevets

(11) **EP 3 861 681 B1**

(12) **EUROPÄISCHE PATENTSCHRIFT**

(45) Veröffentlichungstag und Bekanntmachung des Hinweises auf die Patenterteilung:
**01.06.2022 Patentblatt 2022/22**

(21) Anmeldenummer: **19809382.5**

(22) Anmeldetag: **06.11.2019**

(51) Internationale Patentklassifikation (IPC):
**H04L 41/0631** *(2022.01)*    **H04L 41/069** *(2022.01)*

(52) Gemeinsame Patentklassifikation (CPC):
**H04L 41/064; H04L 41/069**

(86) Internationale Anmeldenummer:
**PCT/EP2019/080317**

(87) Internationale Veröffentlichungsnummer:
**WO 2020/094681 (14.05.2020 Gazette 2020/20)**

(54) **SYSTEM UND VERFAHREN ZUR FEHLERERKENNUNG UND FEHLERURSACHEN-ANALYSE IN EINEM NETZWERK VON NETZWERKKOMPONENTEN**

SYSTEM AND METHOD FOR FAULT DETECTION AND ROOT CAUSE ANALYSIS IN A NETWORK OF NETWORK COMPONENTS

SYSTÈME ET PROCÉDÉ DE DÉTECTION D'ERREURS ET D'ANALYSE DES CAUSES DES ERREURS DANS UN RÉSEAU DE COMPOSANTS RÉSEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2018 EP 18204977**

(43) Veröffentlichungstag der Anmeldung:
**11.08.2021 Patentblatt 2021/32**

(73) Patentinhaber: **Siemens Aktiengesellschaft**
**80333 München (DE)**

(72) Erfinder: **VÖLKSEN, Gerd**
**80803 München (DE)**

(56) Entgegenhaltungen:
**US-A1- 2012 124 353    US-A1- 2017 118 092**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein System und Verfahren zur Fehlererkennung und Fehlerursachen-Analyse in einem Netzwerk von Netzwerkkomponenten.

Eine Datenverarbeitung von Ereignisdaten (Eventdaten) und/oder Sensordaten dient beispielsweise dazu, kritische Zustände oder Fehler in Industrie- oder Fabrikanlagen zu erkennen. Die Komponenten der Anlagen sind vernetzt und übertragen ihre Event- und Sensordaten zu entsprechenden Rechnern, wo die Verarbeitung stattfindet. "Internet of Things" (IoT), "Web of Systems" (WoS), "Industrie 4.0" oder "Cyber-Physical Systems" (CPS) sind Begriffe, die diese Thematik umschreiben.

Die Erstellung von modernen automatisierten Anlagen, wie zum Beispiel Produktionszellen in der Automobilindustrie oder in jeder beliebigen anderen Produktionsanlage, basiert auf dem Konzept von cyber-physikalischen Netzwerken (Cyber-Physical Systems). Ein cyber-physikalisches Netzwerk bezeichnet den Verbund mechanisch-elektronischer Komponenten, aber auch chemischer Elemente mit softwaretechnischen Modulen, die über eine Dateninfrastruktur, wie zum Beispiel das Internet, miteinander kommunizieren und sich durch einen hohen Grad an Komplexität auszeichnet. Die Ausbildung von cyber-physikalischen Netzwerken entsteht aus der Vernetzung eingebetteter Netzwerkkomponenten durch drahtgebundene oder drahtlose Kommunikationsnetze. Cyber-physikalische Netzwerke decken ein breites Spektrum möglicher Bereiche ab, in denen sie zum Einsatz kommen können. Hierzu gehören medizintechnische Geräte und Systeme, Verkehrssteuerungs- und Verkehrslogistiksysteme, vernetzte Sicherheits- sowie Fahrassistenzsysteme im Automobilbereich, industrielle Prozesssteuerung- und Automatisierungsanlagen in der Fertigung, Energieversorgungsmanagementsysteme, Infrastruktursysteme für Telekommunikation, und dergleichen mehr.

Große Netzwerke (Netzwerksysteme) dieser Art produzieren große Mengen an Eventnachrichten bzw. Sensordaten über Zustände und Fehler (Events) von einzelnen Komponenten oder Sub-Netzwerken. Alle dieser Nachrichten müssen übertragen und verarbeitet werden. Im Rahmen dieser Erfindung wird als Event ein Ereignis innerhalb eines bestimmten Netzwerks oder einer Domäne bezeichnet. Es ist etwas, das bereits geschehen ist oder als etwas Geschehenes innerhalb eines bestimmten Anwendungsbereichs (Domäne) betrachtet wird.

Eine Fehlererkennung muss möglichst in Echtzeit erfolgen, um eine schnelle Reaktion darauf zu ermöglichen. Fehlernachrichten produzieren allerdings häufig mehrere Folgefehler, so dass die tatsächliche Fehlerursache oft nur schwer zu erkennen ist. Auch Folgefehler können wiederum weitere Folgefehler nach sich ziehen, so dass Lawinen von Ereignisketten entstehen. Dabei können mehrere Tera-Bytes an Datenmengen pro Tag anfallen, bei hochkomplexen Systemen auch Peta-Bytes pro Stunde.

Bei einer zentral organisierten und strukturierten Datenverarbeitungslösung muss der Datenverkehr sehr vieler Signal- oder Eventdaten durch entsprechend große Übertragungskapazitäten ermöglicht werden, da sonst eine Engstelle entsteht, und zwar im allgemeinen dort, wo die Daten zusammenlaufen, nämlich bei dem Rechner, der die zentrale Event- und Sensordaten-Verarbeitung bereitstellt.

Zudem muss bei einer zentralistischen Lösung die Datenverarbeitung ausreichend Speicher- und Rechenkapazität bereitstellen, um die großen Datenmengen behandeln und verarbeiten zu können, was gleichfalls zu einer Engstelle führt, wenn die Datenmengen sehr groß werden. Auch wenn die Verarbeitung der Sensor- und Eventdaten in einer Cloud-Computing Umgebung stattfindet, so bleibt immer noch die Engstelle bei der Datenübertragung. Cloud-Computing (Rechnerwolke oder Datenwolke) bezeichnet die Bereitstellung einer IT-Infrastruktur wie beispielsweise Speicherplatz, Rechenleistung oder Anwendungssoftware als Dienstleistung über das Internet. Damit werden IT-Infrastrukturen über ein Rechnernetz zur Verfügung gestellt, ohne diese auf einem lokalen Rechner zu installieren. Angebot und Nutzung dieser Dienstleistungen erfolgen dabei mittels technischer Schnittstellen und Protokolle, wie beispielsweise ein Webbrowser.

Allerdings sind die Zugänge in eine Cloud-Infrastruktur nicht für sehr hohe Übertragungsbandbreiten ausgelegt, so dass eine Vorverarbeitung der Daten in Kommunikations- und Industrienetzen sinnvoll ist.

Bisherige Lösungsansätze sind darauf ausgerichtet, das Transportvolumen und den Verarbeitungsaufwand der Daten zu reduzieren. Eine Möglichkeit besteht in einer Dezentralisierung der Verarbeitung der Sensordaten, bei der die Rechenanforderungen auf verschiedene Komponenten verteilt werden. Als mögliche Komponenten können Netzwerkknoten, Steuerungskomponenten oder andere Hardwareeinheiten dienen, die mit dem Datennetz eines Systems wie einer Industrieanlage verbunden sind und über ausreichend freie Speicherkapazität und geeignete Rechnerleistungen verfügen. Jeder dieser Komponenten werden Regeln oder Algorithmen zugeordnet, die die eingehenden Datenobjekte (Statusmeldungen, Warnungen, Fehlermeldungen) verarbeiten.

Eine andere Lösung ist der Publikations/Abonnement-Ansatz (Publish/Subscribe). Hierbei handelt es sich um eine Softwarearchitektur, bei dem der Absender von Informationen, Texten, Nachrichten, etc., genannt Publizist (Publisher), die Nachrichten nicht so programmiert, dass sie direkt an spezifische Empfänger (Abonnenten), genannt Subscriber, zu senden sind. Stattdessen werden die Nachrichten in Klassen eingeteilt und die Abonnenten (Subscriber) erhalten eine Nachrichte nur dann, wenn sie ein Interesse für die jeweilige Klasse, der die Nachricht zugeordnet worden ist, zuvor geäußert haben. Dadurch gelingt es, nicht alle Daten über das Kommunikationsnetz zu transportieren, sondern den Datentransport auf ein Minimum zu reduzieren im Sinne eines Multicast-Verfahrens anstelle eines Broadcast-Verfahrens. Datenobjekte, die nicht subskribiert sind, werden erst gar nicht verteilt.

Der Begriff "Multicast" bezeichnet in der Telekommunikation eine Nachrichtenübertragung von einem Punkt zu einer Gruppe und ist daher eine Form der Mehrpunktverbindung. Der Unterschied zum Begriff "Broadcast" besteht darin, dass beim Broadcast Inhalte verbreitet werden, die sich jeder mit entsprechend geeigneter Empfangsausrüstung ansehen kann, wohingegen beim Multicast zuvor eine Anmeldung beim Sender erforderlich ist.

Eine weitere Lösung besteht in der Verteilung der Sensordaten-Verarbeitung auf sogenannte Event Processing Units (EPUs) im Datennetz, wodurch die zentrale Datenverarbeitung der Datenobjekte aufgelöst wird. Die EPUs werden auf die Netzknoten und Steuerungskomponenten im Netz verteilt. Die Verteilung der Funktionen (Regeln und Algorithmen) erfolgt auf eine Art und Weise, dass der Abstand zwischen den Datenproduzenten und den Datenkonsumenten (EPUs mit Verarbeitungsregeln) minimiert wird. Dabei wird der Abstand in einer passenden Metrik gemessen, wie beispielsweise mittels sogenannter Hop-Counts (Etappen-Zähler) oder der Daten-Transportgeschwindigkeit. Als Hop wird in Rechnernetzen der Weg von einem Netzknoten zum nächsten bezeichnet. In einem Computernetz werden die binären Informationen in Datenpakete aufgeteilt, die solange von Zwischenstation zu Zwischenstation weitergereicht werden, bis sie den Adressaten erreicht haben. Der Hop-Count ist die Anzahl an Schritten, die ein Paket auf dem Weg vom Absender zum Adressaten zurücklegen muss.

Die EPUs können mittels entsprechender Regeln oder Algorithmen die Datenströme filtern, beispielsweise nach Zeit, Wert oder Wertabweichung, den Mittelwert, die Standardabweichung und/oder den Median bilden oder aus unterschiedlichen Signaltypen eine höherwertige, inhaltsreichere Information extrahieren, einen sogenannten Event. Jeder Netzknoten kann daher sowohl als Konsument als auch als Produzent von Events auftreten.

Insgesamt sorgen diese Ansätze zusammen dafür, dass der Datenverkehr so reduziert wird, dass nur die Segmente des Netzes mit einem Datenverkehr belastet werden, wo sich auch Konsumenten mit einem Abonnement befinden und die Verarbeitung der Daten schneller erfolgen kann. Diese Ansätze werden auch im Rahmen des "Distributed Complex Event Processing" genutzt. Complex Event-Processing (CEP, deutsch: komplexe Verarbeitung von Ereignissen) ist ein Themenbereich der Informatik, der sich mit der Erkennung, Analyse, Gruppierung und Verarbeitung voneinander abhängiger Ereignisse (events) befasst. CEP ist ein Sammelbegriff für Methoden, Techniken und Werkzeuge, um Ereignisse zu verarbeiten, während sie auftreten, also kontinuierlich und zeitnah. CEP leitet aus Ereignissen ein höheres, wertvolles Wissen in Form von sogenannten komplexen Ereignissen ab, d.h. Situationen, die sich nur als Kombination von mehreren Ereignissen erkennen lassen.

Bei CEP geht es somit insbesondere um die Behandlung von Ereignissen, die erst durch das Zusammenwirken mehrerer Ereignisse auftreten. Um verschiedenartige Datenströme in Echtzeit zu verarbeiten und die Ereignisse zu extrahieren und zu analysieren, müssen von derartigen Systemen hohe Datenlasten verkraftet werden. Einsatzgebiete sind beispielsweise die Netzwerküberwachung, die öffentliche Sicherheit, der Katastrophenschutz oder das Energiemanagement.

In der US 2017/118092 A1 wird ein adaptives Benachrichtigungs- und Ticketsystem für ein Telekommunikationsnetz beschrieben. Das System umfasst ein Computergerät und mehrere Netzwerkgeräte, die dem Telekommunikationsnetzwerk zugeordnet sind. Daten werden von einer Vielzahl von vergangenen Netzwerkereignissen erzeugt, die der Vielzahl von Netzwerkgeräten zugeordnet sind. Ein Modell wird aus den Daten generiert und dazu verwendet, um neue Netzwerkereignisse zu interpretieren und ein mögliches Alarmereignis anzuzeigen.

Die US 2012/124353 A1 beschreibt ein Verfahren zum Verarbeiten von Ereignisströmen, wobei verschiedene Verarbeitungseinheiten Ereignisdaten, die einem Ereignisstrom zugeordnet sind, nach zuvor festgelegten Kriterien und Verfahrensschritten verarbeiten.

Allerdings ist die Problematik einer ursächlichen Fehlerextraktion aus einer Flut von Eventdaten wie beispielsweise Fehlerdaten, Folgefehlerdaten, Warnungen, Statusmeldungen, etc. weiterhin ungelöst. Unter einer ursächlichen Fehlerextraktion wird im Rahmen der Erfindung das Herauslösen und Identifizieren von ursächlichen und grundlegenden Fehlern aus Strömen von Fehlermeldungen und Daten, die für ein System von Relevanz sind, bezeichnet.

Die der Erfindung zu Grunde liegende Aufgabe besteht nun darin, ein System und ein Verfahren anzugeben, das sich durch eine verbesserte Bestimmung und Analyse der ursächlichen Fehler in einer möglichen Fehlerkette in einem Netzwerk aus Netzwerkkomponenten auszeichnet.

Diese Aufgabe wird hinsichtlich eines Systems durch die Merkmale des Patentanspruchs 1, und hinsichtlich eines Verfahrens durch die Merkmale des Patentanspruchs 5 erfindungsgemäß gelöst. Die weiteren Ansprüche betreffen bevorzugte Ausgestaltungen der Erfindung.

Die Erfindung betrifft gemäß eines ersten Aspekts ein System zur Fehlererkennung und Fehlerursachen-Analyse in einem Netzwerk bestehend aus mehreren Netzwerkkomponenten, die mit Softwaremodulen und Kommunikationsschnittstellen versehen sind, und Netzwerkknoten, die mittels Kommunikationsverbindungen mit den Netzwerkkomponenten verbunden sind, wobei die Netzwerkkomponenten und/oder die Netzwerkknoten ausgebildet sind, Daten zu generieren, die als eine Menge historischer Daten gespeichert werden, und aus dieser Menge von historischen Daten Eventfolgen bestehend aus einer Abfolge von Events zu bilden. Das System ist ausgebildet, aus den Eventfolgen wiederum die Eventfolgen, die mit einem Alarm-Event enden, zu extrahieren, und aus diesen Eventfolgen mit einem Alarm-Event wiederum relevante Events zu extrahieren und daraus reduzierte Eventfolgen bestehend aus relevanten Events zu konstruieren. Das System ist des Weiteren ausgebildet ist, zu jeder reduzierten Eventfolge einen Automaten zum Erkennen dieser reduzierten Eventfolge zu konstruieren, und die zu jeder reduzierten Eventfolge konstruierten Automaten sukzessive zu einem gemeinsamen Automaten für alle reduzierten Eventfolgen zu vereinigen.

Hierdurch wird ein System geschaffen, das sich durch eine deutlich verbesserte Überwachung und Analyse von ursächlichen Fehlern in Ereignisketten (Eventfolgen) auszeichnet und dabei eine Reduzierung von Speicherkapazitäten im Vergleich zu herkömmlichen System ermöglicht, da ein Automat für die Erkennung von reduzierten Eventfolgen ausgebildet wird.

Gemäß einer weiteren Ausgestaltung der Erfindung ist das System ausgebildet, den gemeinsamen Automaten zu einem deterministischen Automaten optimieren.

Vorteilhafterweise ist das System ausgebildet, eine Zustandsübergangsfunktion des deterministischen Automaten zu zerlegen und in dem Netzwerk zu verteilen.

In einer weiteren Ausgestaltung der Erfindung, ist das System dazu geeignet, ein Publikations/Abonnement-Protokoll an einen oder mehrere Netzwerkknoten zu verteilen.

Gemäß eines zweiten Aspekts betrifft die Erfindung ein Verfahren zur Fehlererkennung und Fehlerursachen-Analyse in einem Netzwerk bestehend aus mehreren Netzwerkkomponenten, die mit Softwaremodulen und Kommunikationsschnittstellen versehen sind, und Netzwerkknoten, die mittels Kommunikationsverbindungen mit den Netzwerkkomponenten verbunden sind. Die Netzwerkkomponenten und/oder Netzwerkknoten generieren Daten, die als eine Menge historischer Daten gespeichert werden, und bilden aus dieser Menge an historischen Daten Eventfolgen bestehend aus einer Abfolge von Events, umfassend:

- Extrahieren derjenigen Eventfolgen aus den Eventfolgen, die mit einem Alarm-Event enden,
- Extrahieren von relevanten Events aus den Eventfolgen mit einem Alarm-Event und Konstruieren von reduzierten Eventfolgen bestehend aus den relevanten Events, und
- Konstruieren eines Automaten zu jeder reduzierten Eventfolge zum Erkennen dieser reduzierten Eventfolge,
- wobei die konstruierten Automaten sukzessive zu einem gemeinsamen Automaten für alle reduzierten Eventfolgen vereinigt werden.

Gemäß einer weiteren Ausgestaltung des erfindungsgemäßen Verfahrens wird der gemeinsame Automat zu einem deterministischen Automaten optimiert wird.

Gemäß einer vorteilhaften Weiterentwicklung des erfindungsgemäßen Verfahrens wird eine Zustandsübergangsfunktion des deterministischen Automaten zerlegt und in dem Netzwerk verteilt.

In einer weiteren Ausgestaltung des erfindungsgemäßen Verfahrens wird ein Publikations/Abonnement-Protokoll (Publish/Subscribe) an einen oder mehrere Netzwerkknoten verteilt.

Gemäß einem dritten Aspekt betrifft die Erfindung ein Computerprogrammprodukt, das einen und/oder mehrere ausführbare Computercodes enthält zur Ausführung des Verfahrens nach einer Ausführungsform des Verfahrens des zweiten Aspekts der Erfindung. Gemäß einem vierten Aspekt betrifft die Erfindung ein nicht-flüchtiges computerlesbares Datenspeichermedium, welches ausführbaren Programmcode enthält, der dazu ausgelegt ist wenn er ausgeführt wird, das Verfahren gemäß einer Ausführungsform des zweiten Aspekts der Erfindung auszuführen.

Nachfolgend wird die Erfindung anhand von in der Zeichnung dargestellten Ausführungsbeispielen näher erläutert.

Dabei zeigt:

Figur 1      eine Übersichtsdarstellung zur Erläuterung eines erfindungsgemäßen Systems;

Figur 2      ein Ablaufdiagramm zur Erläuterung eines Verfahrens gemäß der Erfindung;

Figur 3      ein Blockdiagramm zur Erläuterung eines nichtdeterministischen endlichen Automaten für eine Eventfolge gemäß eines optionalen Ausführungsdetails des erfindungsgemäßen Verfahrens;

Figur 4      ein Blockdiagramm zur Erläuterung eines nichtdeterministischen endlichen Automaten für zwei Eventfolgen gemäß eines optionalen Ausführungsdetails des erfindungsgemäßen Verfahrens;

Figur 5      ein Blockdiagramm zur Erläuterung eines deterministischen endlichen Automaten gemäß eines optionalen Ausführungsdetails des erfindungsgemäßen Verfahrens;

Figur 6      ein Blockdiagramm zur Erläuterung einer Anordnung einer Zustandsübergangsfunktion in einem Kommunikationsnetz gemäß eines optionalen Ausführungsdetails des erfindungsgemäßen Verfahrens.

Zusätzliche Merkmale, Aspekte und Vorteile der Erfindung oder ihrer Ausführungsbeispiele werden durch die ausführliche Beschreibung in Verbindung mit den Ansprüchen ersichtlich.

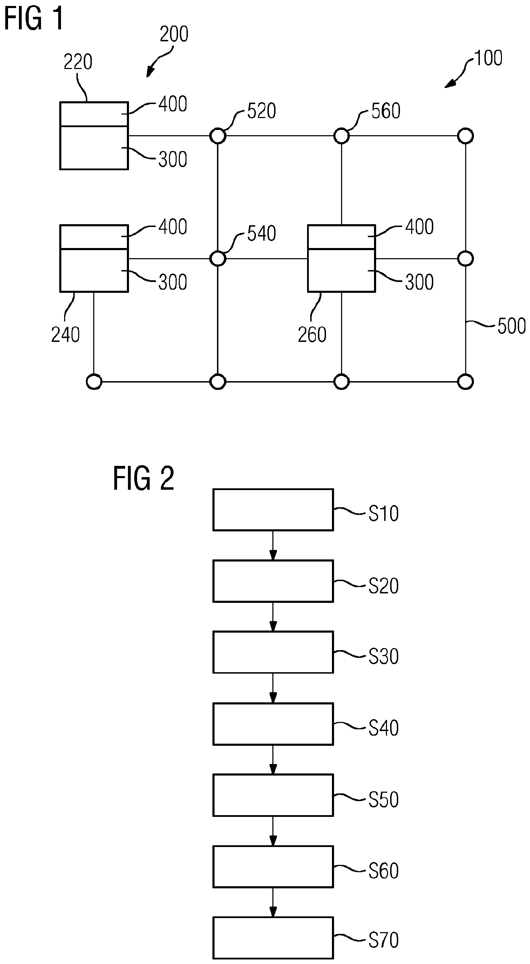

Fig. 1 zeigt ein System 100 zur Fehlererkennung und Fehlerursachen-Analyse in einem Netzwerk 200 mit Netzwerkkomponenten 220, 240, 260, ..., N und Netzwerkknoten 520, 540, 560 ,..., M, die hier nur beispielhaft dargestellt sind. Die Anzahl N der Netzwerkkomponenten 220, 240, 260 und die Anzahl M der Netzwerkknoten 520, 540, 560 kann an die jeweilige Anwendung angepasst werden. Die Komponenten 220, 240, 260 können Sensoren mit Softwaremodulen 300 und Kommunikationsschnittstellen 400 darstellen, oder auch Aktuatoren und Steuergeräte, die jeweils Daten generieren, die beispielsweise aufgrund des Zeitverlaufs als Eventfolgen darstellbar sind. Eines oder mehrere dieser Datenpakete können das Auslösen eines Alarms bewirken oder darauf hinweisen, dass ein Alarm ausgelöst werden sollte, der beispielsweise auf das fehlerhafte Verhalten einer Netzwerkkomponente 220, 240, 260 selbst und/oder einer Anlage und/oder einer Einheit, die mit den Netzwerkkomponenten 220, 240, 260 überwacht wird, hinweist.

Eine Anlage oder eine Einheit kann auch einen Raum oder einen Gebäudekomplex oder eine Industrieanlage darstellen, die/der jeweils mit den Komponenten 220, 240 und 260 überwacht wird. So können beispielsweise einige der Netzwerkkomponenten 220, 240, 260 z.B. Temperatursensoren und Rauchmeldesensoren darstellen, die Räume in einem Gebäude überwachen. Der Netzwerckomponenten 220, 240, 260 sind mittels Kommunikationsverbindungen 500 mit den Netzwerkknoten 520, 540 und 560 verbunden. Bei den Netzwerkknoten 520, 540, und 560 kann es sich um Router, Steuergeräte und andere Hardwaregeräte handeln, die über die erforderliche Rechnerleistung verfügen. Allerdings können auch die Netzwerkknoten 520, 540 und 560 in einer Weiterentwicklung der Erfindung selbst Daten generieren, die sie dann an andere Netzwerkknoten 520, 540, 560 weiterleiten.

Die Netzwerkkomponenten 220, 240 und 260 generieren Daten für einen bestimmten Event. Beispielsweise ist das Messen einer Temperatur T zu einem bestimmten Zeitpunkt $t_x$ ein Event E. Wird nun zu einem weiteren Zeitpunkt $t_y$ ein weiterer Temperaturwert T gemessen, so ist dies ein weiterer Event. Die Events können nun zu Eventfolgen zusammengefasst werden. Im Rahmen dieser Erfindung ist es von Interesse, die Events herauszufinden, die auf einen Fehler eines zu überwachenden Systems und/oder eine Anlage, etc., hinweisen.

Fig. 2 zeigt ein Ablaufdiagramm eines erfindungsgemäßen Verfahrens zur Fehlerursachen-Analyse (Root Cause Analyse) von ursächlichen Fehlern in einer oder mehreren Eventfolgen, wie sie in dem Netzwerk 200 auftreten.

Im Schritt S10 werden aus einer Menge historischer Daten diejenigen Eventfolgen, die mit einem Alarm-Event 'a' enden, extrahiert.

Im Schritt S20 werden aus den Eventfolgen, die mit einem Alarm-Event 'a' enden, die relevanten Events extrahiert und daraus reduzierte Eventfolgen bestehend aus relevanten Events konstruiert. Ein relevanter Event ist ein Event, dem eine Bedeutung hinsichtlich eines Hinweises auf einen Fehler und/oder einen Alarm zugeschrieben wird.

Im Schritt S30 wird zu jeder reduzierten Eventfolge ein spezieller (oder: fundamentaler) Automat, $A_i$, 700, der diese reduzierte Eventfolge erkennt, konstruiert.

Im Schritt S40 werden die konstruierten (speziellen, oder fundamentalen) Automaten, $A_i$, 700 sukzessive zu einem gemeinsamen Automaten (aus integrierten fundamentalen Automaten), $gA_i$, 800 für alle reduzierten Eventfolgen vereinigt.

Im Schritt S50 wird dieser gemeinsame Automat, $gA_i$, 800 optimiert.

Im Schritt S60 wird die Zustandsübergangsfunktion $\delta$ des gemeinsamen Automaten, $gA_i$, 800 zerlegt und in dem Netzwerk 200 verteilt.

Im Schritt S70 wird das Publikations/Abonnement-Protokoll (Publish/Subscribe) an die Netzknoten n 540, 560 verteilt.

Im Folgenden werden die Schritte S10 - S70 im Einzelnen beschrieben.

Schritt S10: Extraktion der Eventfolgen aus den historischen Daten

Eine Eventfolge besteht aus einer Folge von Events, wobei ein Event von den Netzwerkkomponenten 220, 240, 260 gemessen und/oder generiert wird. Aus der Menge von Eventfolgen werden diejenigen Eventfolgen extrahiert, die mit einem Alarm-Event 'a' enden. Ein Alarmevent 'a' weist auf eine kritische Situation hin, wie beispielsweise eine erhöhte Temperatur oder ein erhöhter Druck. Eine Eventfolge, die mit einem Alarmevent 'a' endet, kann wie folgt beschrieben werden:

$$e_0(t_0) \rightarrow e_1(t_1) \rightarrow e_2(t_2) \rightarrow ... \rightarrow e_{N-2}(t_{N-2}) \rightarrow e_{N-1}(t_{N-1}) \rightarrow e_N(t_N) = a$$

mit Zeitpunkten $t_{i-1} < t_i$ für i = 1, ... , N.

Die repräsentative Menge an historischen Daten für die Auswahl der Eventfolgen ist vorteilhafterweise groß genug, damit eine realistische zufällige Auswahl von Eventfolgen als Trainingsdaten zum Beispiel für ein neuronales Netzwerk getroffen werden kann, um eine Häufung von Spezialfällen zu vermeiden. Die nicht ausgewählten repräsentativen Eventfolgen, die nicht in die Fehlerursachen-Analyse (Root Cause Analyse) einfließen, können jedoch als Testdaten verwendet werden.

Die zufällig ausgewählten Eventfolgen können gemäß folgender, quantitativer Kriterien bestimmt werden:

a) Festlegen eines relevantes Zeitfenster $\Delta T > 0$ zur Detektion eines Events, wobei dieses Zeitfenster entsprechend der jeweiligen Anwendung im Sekunden- bis Stundenbereich liegt. Jeder Event in diesem Zeitfenster wird berücksichtigt:

$$\{e_i(t_i) \mid t_N - \Delta T \leq t_i \leq t_N\}$$

b) Festlegen der relevanten Anzahl $K < N$ der Events, die einem Alarm vorausgehen sollen. Dies können entsprechend der Anwendung einige wenige bis zu tausenden von Events sein. Jeder Event nach dieser vorgegebenen Anzahl wird dann berücksichtigt: $\{e_i(t_i) \mid N-K \leq i \leq N\}$

c) Erste Kombination aus a) und b): Es werden nur die letzten Events aus einem Zeitfenster $\Delta T$ berücksichtigt, also höchstens K Events:

$$\{e_i(t_i) \mid t_N - \Delta T \leq t_i \leq t_N \text{ und } N-K \leq i \leq N\}$$

d) Zweite Kombination aus a) oder b): Berücksichtigung aller Events aus dem Zeitfenster $\Delta T$, mindestens aber die letzten K:

$$\{e_i \mid t_N - \Delta T \leq t_i \leq t_N \text{ oder } N-K \leq i \leq N\}$$

Folgende qualitative Kriterien können neben der Zeit und der Anzahl definiert werden, die sich z.B. auf Typ, Herkunft oder Inhalt der Events beziehen, wie beispielsweise:

- Typ des Events
- Typ der Eventquelle
- Herkunft des Events, z.B. aufgeteilt nach realem oder logischem Ort:

  - geometrische Daten
  - Netzwerksegment der Eventquelle
  - Subsystem der Anlage

- Inhalt des Events: ein Prädikat, das den Wert des Events liest und einen booleschen Wert generiert, wie beispielsweise:

  $e_i(t_i)$ .value > Limit
  oder
  $\mid e_i(t_i)$ .value - Limit $\mid$ <

Diese Vorauswahl von Events für die Erkennung von Mustern, die zu einem Alarm 'a' führen, ist anwendungsabhängig und erfordert ein jeweiliges spezifisches Expertenwissen, da die Menge der zu betrachtenden Events einerseits nicht zu groß sein sollte, was bei Eventquellen mit einer hochfrequenten Datenerzeugung wie bei der Messung von Umdrehungen bei Turbinen leicht der Fall sein kann, und andererseits keine Events ausgeschlossen werden sollten, die eventuell einen Hinweis auf einen Alarm geben könnten.

Im Folgenden wird ein einfaches Beispiel für die Erzeugung einer Fehlerursachen-Analyse (Root Cause Analyse) beschrieben.

Eine Eventfolge 1 besteht aus den Events b $\rightarrow$ c $\rightarrow$ d $\rightarrow$ e $\rightarrow$ g $\rightarrow$ a, und eine Eventfolge aus den Events d $\rightarrow$ c $\rightarrow$ f $\rightarrow$ g $\rightarrow$ a, die jeweils zu einem Alarm 'a' führen.

Eine quantitative Analyse der Eventfolgen 1 und 2 wird durch Zählen der Häufigkeit der einzelnen Events a, b, c, d, e, f, g, e in den Eventfolgen durchgeführt. Für die erwähnten Eventfolgen ist dies in der Tabelle 1 dargestellt.

Tabelle 1

| Event | b | c | d | e | f | g |
|---|---|---|---|---|---|---|
| Folge 1 | 1 | 1 | 1 | 1 | | 1 |
| Folge 2 | | 1 | 1 | | 1 | 1 |
| Anzahl des Auftretens eines Events | 1 | 2 | 2 | 1 | 1 | 2 |

Es wird davon ausgegangen, dass eine Häufung identischer Events, z.B. aufgrund fehlender Filterung bei der Eventquelle, nicht vorkommt. Falls solche Filter nicht eingesetzt werden, könnte eine beispielhafte Eventfolge "d → c → c → c → f → g → a" durch Zusammenziehen von identischen Events entsprechend zu "d → c → f → g → a" verkürzt werden. Dasselbe gilt, wenn wechselseitiges Wiederholen von identischen Events vorkommt, beispielsweise in der Eventfolge d → c → d → d → c → c → d → a.

Schritt S2: Extraktion relevanter Events und Konstruktion reduzierter Eventfolgen

Es wird ein Schwellenwert zwischen der minimalen und maximalen Anzahl des Auftretens eines bestimmten Events festgelegt, in diesem Beispiel im Bereich [1, 2]. In diesem Bereich werden nur diejenigen Events betrachtet, die häufiger als der festgelegte Schwellenwert, z.B. 1,5, vorkommen. Bei der obigen Tabelle 1 sind das die Events c, d und g, die jeweils zweimal im betrachteten Bereich auftreten. Die Events b, e und f werden für die Root Cause Analyse nicht weiter berücksichtigt, da sie jeweils nur einmal in den beiden Eventfolgen auftreten, wie dies in Tabelle 2 dargestellt ist.

Tabelle 2

| Events | c | d | g |
|---|---|---|---|
| Folge 1 | 1 | 1 | 1 |
| Folge 2 | 1 | 1 | 1 |
| Anzahl Events | 2 | 2 | 2 |

Der Schwellenwert sollte so definiert sein, dass keine für den Alarm relevante Events ausgeschlossen werden, andererseits aber eine zu große Anzahl an irrelevanten Events berücksichtigt werden muss, d.h. der Schwellenwert ist weder zu hoch noch zu niedrig einzustellen.

Die aufgetretenen Eventfolgen werden reduziert, indem die als irrelevant eingestuften Events entfernt werden. Bei der Eventfolge 1 sind dies die Events b und e, und bei der Eventfolge 2 der Event f:

Die Eventfolge 1 wird von b → c → d → e → g → a reduziert zu c → d → g → a.

Die Eventfolge 2 wird von d → c → f → g → a reduziert zu d → c → g → a.

Schritt S30: Konstruktion eines nicht-deterministischen endlichen Automaten, $A_i$, 700

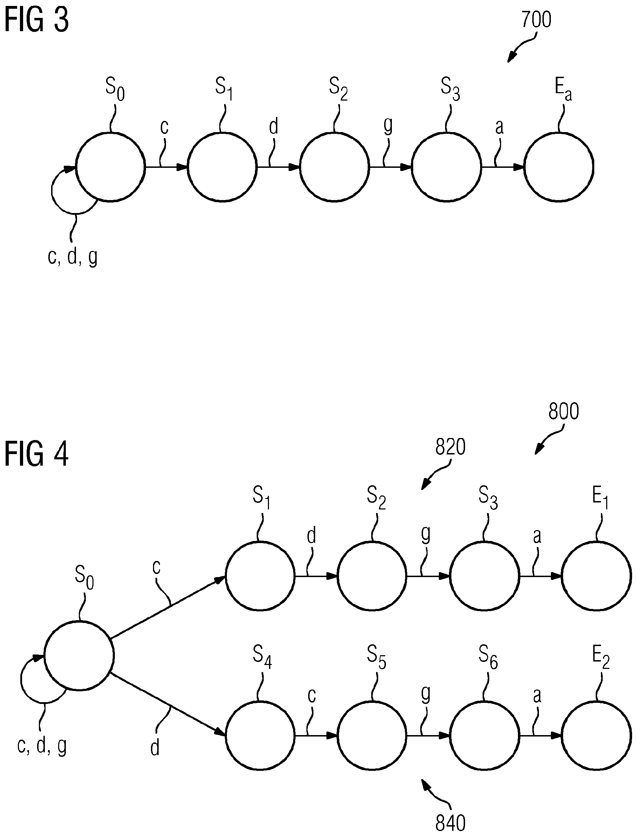

Zu jeder der reduzierten Eventfolgen wird ein nicht-deterministischer endlicher Automat, $A_i$, 700, der diese reduzierten Eventfolgen erkennt, konstruiert. Dabei bleiben die irrelevanten Events (hier: b, e, f) unberücksichtigt. In der Figur 3 ist der Automat, $A_i$, 700 zu der Folge 1 graphisch dargestellt.

Für diesen Schritt S30 wird ein nicht-deterministischer endlicher Automat, $A_i$, 700 gewählt. Der Nicht-Determinismus des Automaten, $A_i$, 700 ergibt sich durch den Zustand $s_0$, da bei diesem Zustand $s_0$ der Event 'c' sowohl in den Zustand '$s_0$', als auch in den Zustand '$s_1$' übergehen kann. Damit kann eine Folge von Events solange im Zustand $s_0$ verharren, bis bei einem Event 'c' richtigerweise ein zufälliger Übergang in den Zustand '$s_1$' erfolgt. Tritt nun ein Event 'd' ein, so erfolgt ein Übergang in den Zustand '$s_2$', und bei einem Event 'g' tritt nun der Zustand '$s_3$' ein, der einen Alarm 'a' auslöst, der bei der richtigen Sequenz c → d → g → a auftritt.

Bei den Zuständen sind nur die definierten Übergänge dargestellt. Die Zustandsübergangsfunktion $\delta$ für den in Fig. 3 dargestellten Automaten $A_i$, 700 ist in der folgenden Tabelle 3 dargestellt. Gemäß der Zustandsübergangsfunktion $\delta$ werden die einzelnen Zustände beim Eintreffen eines neuen Events in einen Folgezustand überführt, wobei gemäß dem vorgesehenen Nicht-Determinismus des Automaten, $A_i$, 700 dies ein Folgezustand von mehreren möglichen Folgezuständen ist. Gegebenenfalls gibt es keinen Folgezustand, dargestellt durch das Symbol Ø für die leere Menge.

Tabelle 3

|       | a         | c              | d         | g         |
|-------|-----------|----------------|-----------|-----------|
| $s_0$ | Ø         | $\{s_0, s_1\}$ | $\{s_0\}$ | $\{s_0\}$ |
| $s_1$ | Ø         | Ø              | $\{s_2\}$ | Ø         |
| $s_2$ | Ø         | Ø              | Ø         | $\{s_3\}$ |
| $s_3$ | $\{E_a\}$ | Ø              | Ø         | Ø         |
| $E_a$ | Ø         | Ø              | Ø         | Ø         |

Formal erfolgt die Definition des Automaten, $A_i$, 700 zu einer reduzierten Eventfolge in folgender Weise: Seien $(v_i)$, i = 1, ... , N die reduzierten Eventfolgen mit $(v) = v_o \rightarrow v_1 \rightarrow ... \rightarrow v_{N-1} \rightarrow v_N = a$, und sei V die Menge aller Events, die in den ursprünglichen Eventfolgen vorkommen, so wird der endliche Automat, $A_i$, 700 definiert mittels der Zustandsmenge S, der Eingabemenge X, der Zustandsmenge F, des Startzustands $s_0$ und der Zustandsübergangsfunktion $\delta$, die im Folgenden näher erläutert wird. Der Automat, $A_i$, 700 ist somit bestimmt durch $A_i = (S, X, F, s_0, \delta)$.

Die Zustandsmenge $S := \{E_a\} \cup \{s_i | i = 0, ... , N\}$ ist die Menge aller Zustände s, d.h. zu jedem in den reduzierten Eventfolgen auftretenden Event $v_i$ gibt es einen Zustand $s_i$ des Automaten 700. Dabei wird ein mehrfaches Auftreten von Events innerhalb der Eventfolgen berücksichtigt, wobei $v_i$ das i-te Auftreten irgendeines Events v darin bezeichnet. Insbesondere bezeichnet $s_i$ denjenigen Zustand, mit dem der Event $v_i$ in den Zustand $s_{i+1}$ übergeht. Analog bezeichnet $s_N$ denjenigen Zustand, mit dem Event $v_N = a$ in den Endzustand $E_a$ übergeht.

Die Eingabemenge $X := \{a\} \cup \{v_i | v_i \in (v_i)$, i = 0, ..., N - 1\}$ stellt die Menge der Eingabe der relevanten Events v der Eventfolge, unabhängig von dem Kontext, in dem sie auftreten, sowie den Alarm 'a' dar. Der Kontext wird dann durch die Zustandsübergänge dargestellt.

Die Endzustandsmenge $F := \{E_a\}$ stellt die Menge der Endzustände dar, wenn der Alarm 'a' nach der vorgegebenen Eventfolge auftritt.

Der Startzustand $S_o := S_o$ ist der Anfangszustand.

Die Zustandsübergangsfunktion $\delta : S \times X \rightarrow 2^S$ überführt einen einzelnen Zustand beim Eintreffen eines neuen Events in einen (oder keinen) von mehreren möglichen Folgezustände, wobei $2^S$ die Potenzmenge der Zustandsmenge S bezeichnet. Ist die leere Menge Ø angegeben, gibt es auch keinen Zustands-übergang. Die Zustandsübergangsfunktion $\delta$ für beliebige Automaten $A_i$, 700, kann in einer Tabelle 4 dargestellt werden, die wie folgt aufgebaut ist:

Tabelle 4

| $\delta$ | $v_0$ | $V_i$<br>i=1, ... , N-1 | $v_N = a$ |
|----------|-------|-------------------------|-----------|
| $s_0$ | $\{S_0, S_1\}$ | $\{s_0\}$ | Ø |
| $s_j$<br>j=1, ... , N-1 | Ø | Wenn i = j, dann $\{s_{i+1}\}$ sonst Ø | Ø |
| $S_N$ | Ø |  | $\{E_a\}$ |
| $E_a$ | Ø | Ø | Ø |

Wie aus der Tabelle 4 ersichtlich, wird ein Zustand $s_i$ beim Eintreffen von einem Event $v_i$ in den Folgezustand '$s_{i+1}$' überführt. Eine Ausnahme ist der Zustand '$s_0$', der alle übrigen Events auf sich selbst abbildet.

Bei dem in der Figur 3 dargestellten Automaten, $A_i$, 700 führt der Alarm-Event 'a' in den Endzustand $E_a$. Allerdings kann dies bei der praktischen Anwendung anders definiert werden, da es häufig wichtig ist, dass vor Erreichen eines kritischen Zustands, also dem Eintreten eines Alarm-Events, eine entsprechende Warnung erfolgt und damit bereits der Endzustand eingetreten ist, um geeignete Gegenmaßnahmen zu ergreifen.

Insofern kann bei der Verarbeitung der Eventfolge in der Praxis (Feldeinsatz) der Root Cause Analyse spätestens bei dem Event $v_{N-1}$ (in Figur 3 der Event 'g') eine Meldung über den möglicherweise direkt bevorstehenden Alarm-Fall generiert werden, und diese kann vorteilhaft mit einer Aktion verbunden werden, die eine Gegenmaßnahme einleitet.

Schritt S40: Integration der nicht-deterministischen endlichen Automaten, $A_i$, 700

Da es eine Menge von Eventfolgen von relevanten Events gibt, wird auch eine entsprechende Menge von Automaten, $A_{i1}$, $A_{i2}$, ..., $A_{in}$, 700 entwickelt. Daher wird aus diesen Automaten $A_{i1}$, $A_{i2}$,..., $A_{in}$, 700 sukzessive ein gemeinsamer Automat, $gA_i$, 800 zur Erkennung aller Eventfolgen konstruiert. Dazu werden die Startzustände in einem gemeinsamen Startzustand zusammengefasst, der sich in die verschiedenen Äste 820, 840 der verschiedenen Eventfolgen nicht-deterministisch verzweigt. Seien also $A_i = (X_i, S_i, F_i, s_{oi}, \delta_i)$, $i \in \{1,2\}$ zwei $A_i$s, dann ist der gemeinsame $gA_i$ = $(X, S, F, s_o, \delta)$ wie folgt definiert:

Die Eingabemenge $X: = X_1 \cup X_2$ ist die einfache Vereinigung der relevanten Events.

Die Zustandsmenge $S := \{s_o\} \uplus (S_1 \setminus \{s_{o1}\}) \uplus (S_2 \setminus \{s_{o2}\})$ ist die disjunkte Vereinigung der Zustandsmengen ohne die einzelnen Startzustände, aber dafür mit einem neuen gemeinsamen Startzustand $s_0$.

Die Endzustandsmenge $F := F_1 \uplus F_2$ ist die disjunkte Vereinigung der Endzustandsmengen, also $F := \{E_{a1}, E_{a2}\}$

$s_o: = s_o$

Die Zustandsübergangsfunktion $\delta : S \times X \to 2^S$ implementiert die folgenden Zustandsübergänge:

i)

$$\delta(s_o, x) := \{s_o\} \cup (\delta_1(s_{o1}, x) \setminus \{s_{o1}\}) \cup (\delta_2(s_{o2}, x) \setminus \{s_{o2}\}), \forall x \in X;$$

Für jeden Event wird der Startzustand auf sich selbst und auf die Folgezustände abgebildet.

ii)

$$\delta(s,x) := \delta_1(s,x) \quad \text{wenn } s \in S_1 \setminus \{s_{o1}\}$$

$$\delta(s,x) := \delta_2(s,x) \quad \text{wenn } s \in S_2 \setminus \{s_{o2}\}$$

Die Figur 4 zeigt das Ergebnis dieser Konstruktion eines gemeinsamen Automaten $gA_i$, 800 für die beiden Eventfolgen $c \to d \to g \to$ und $d \to c \to g \to a$ aus dem im Obigen dargestellten Beispiel.
Schritt S50: Optimierung des gemeinsamen Automaten, $gA_i$, 800 durch Konstruktion eines minimalen deterministischen endlichen Automaten, $dA_i$, 900
Es wird zum obigen Automaten, $gA_i$, 800 ein äquivalenter deterministischer minimaler endlicher Automat, $dA_i$ = $(S, X, F, s_0, \delta)$, 900 konstruiert. Die im Automaten, $gA_i$, 900 auftretende Nicht-Determinismen können konstruktiv mit Standardmethoden, z.B. der Potenzmengenkonstruktion, entfernt werden. Die folgende Tabelle 5 zeigt die Zustandsü-bergangsfunktion $\delta$ für den integrierten minimalen deterministischen Automaten, $dA_i$, 900 für die beiden Beispielfolgen:

Tabelle 5

| $\delta$ | a | c | d | g |
|---|---|---|---|---|
| $s_0$ | f | $s_1$ | $s_4$ | $s_0$ |
| $s_1$ | f | $s_1$ | $s_2$ | $s_0$ |
| $s_2$ | f | $s_5$ | $s_4$ | $s_3$ |
| $s_4$ | f | $s_5$ | $s_4$ | $s_0$ |
| $s_5$ | f | $s_1$ | $s_2$ | $s_3$ |
| $s_3$ | $E_a$ | $s_1$ | $s_4$ | $s_0$ |

(fortgesetzt)

| $\delta$ | a | c | d | g |
|---|---|---|---|---|
| $E_a$ | f | f | f | f |
| f | f | f | f | f |

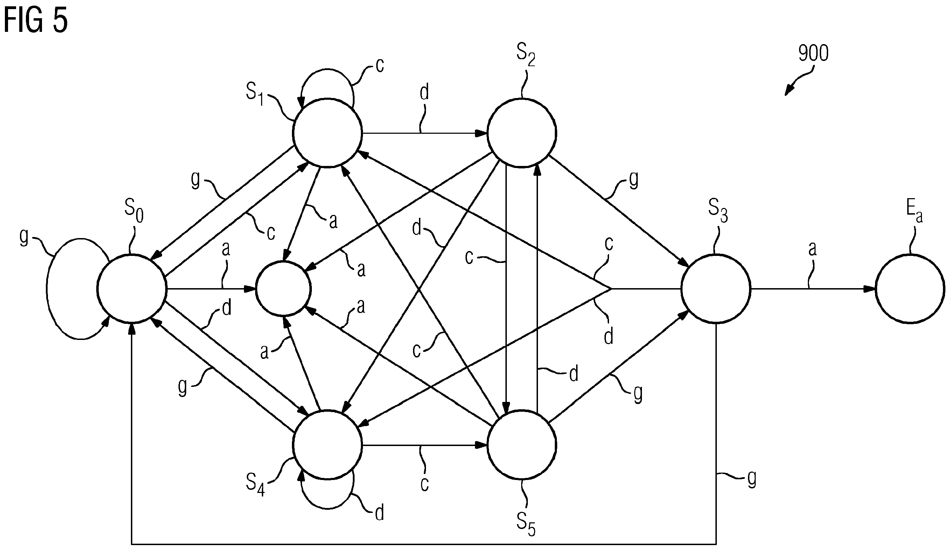

Der Zustand 'f' steht für die leere Menge im nicht-deterministischen Fall. Er wird dann erreicht, wenn der Alarm 'a' erkannt wird, ohne dass zuvor eine der vorgegebenen Eventfolgen durchlaufen wurde. 'f' ist somit ein Indikator dafür, dass die Auswahl der Eventfolgen nicht optimal war bzw. dass es eine andere Eventfolge gibt, die mit einem Alarm endet. Für die beiden Zustände 'f' und '$E_a$' kann 'f' als Folgezustand definiert werden, da es sich um End- bzw. Fehlerzustände handelt. In Figur 5 ist ein deterministischer Automat, $dA_i$, 900 dargestellt, der sich durch eine höhere Komplexität gegenüber der nicht-deterministischen Variante auszeichnet. Schritt S60: Zerlegung und Verteilung der Zustandsübergangsfunktion des minimalen deterministischen endlichen Automaten, $dA_i$, 900

Die Funktion des Automaten, $dA_i$, 900 ist im Wesentlichen durch die Zustandsübergangsfunktion $\delta: S \times X \to S$ beschrieben. Die Zustandsübergangsfunktion implementiert die Ursachenanalyse (Root Cause Analyse), indem alle Events entsprechend der Zustandsübergansfunktion $\delta$ in Folgezustände übergehen und beim Auftreten von '$E_a$' oder 'f' eine Meldung abgeben.

Bei einem zentralistischen Datenverarbeitungssystem wird die Zustandsübergangsfunktion $\delta$ in einem Netzwerkknoten 520 im Netzwerk 200 abgelegt und alle Events werden zu diesem Knoten 520 geroutet. Die Zustände nehmen dann gemäß der Zustandsübergangsfunktion $\delta$ ihren jeweiligen Zustand an bis der End- oder der Fehlerzustand erreicht ist.

Im Netzwerk 200 werden die Netzwerkknoten 520, 540, 560 identifiziert, die am dichtesten bei einer Eventquelle wie einer Netzwerkkomponente 220 liegen. Sei also $n_x$ der Netzwerkknoten 520, in dem der Event x generiert wird bzw. der den kürzesten Weg zu einer Netzwerkkomponenten-Datenquelle (Sensordatenquelle) 220 von x hat.

Sei zudem $\delta: S \times X \to S$ die Zustandsübergangsfunktion des Automaten $dA_i$, dann wird $\delta$ nach X zerlegt, so dass eine neue Funktion entsteht: $\delta': X \to [S \to S]$, d.h. es wird jedem Event $x \in X$ eine Zustandsübergangsfunktion $\delta'_x = \delta'(x):S \to S$, $\forall x \in X$ mit $\delta'(x)(s) = \delta(s, x)$ zugeordnet.

Gemäß dem im Obigen dargestellten Beispiel hat die Funktion $\delta'_c$ das folgende in Tabelle 6 dargestellte Aussehen:

Tabelle 6

| S | $\delta'_c(s)$ |
|---|---|
| $s_0$ | $s_1$ |
| $s_1$ | $s_1$ |
| $s_4$ | $s_5$ |
| $s_2$ | $s_5$ |
| $s_5$ | $s_1$ |
| $s_3$ | $s_1$ |
| $E_a$ | f |
| f | f |

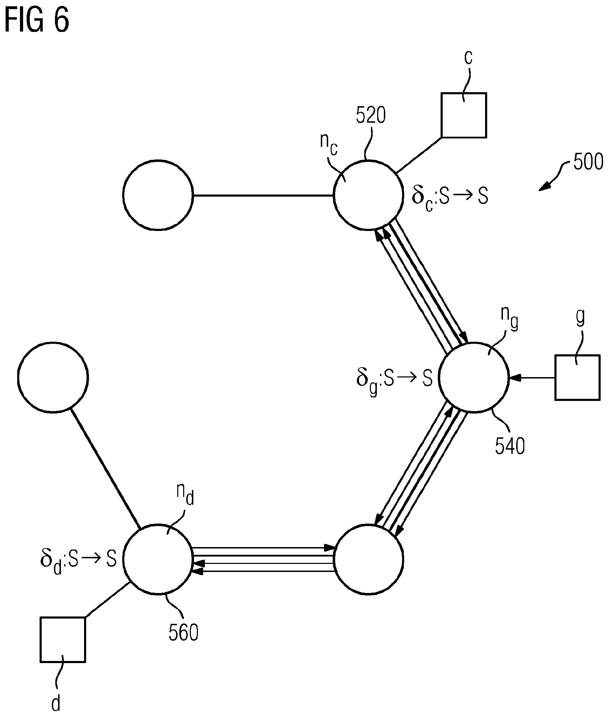

Dann werden die Funktionen $\delta'_x$ dem jeweiligen Netzwerkknoten, $n_x$, 520 zugeordnet. Die Figur 6 zeigt die Zuordnung für ein beispielhaftes Netzwerk 200, das die auftretenden Zustandsänderungen unter den relevanten Netzwerkknoten 520, 540, 560 mittels Multicast-Nachrichten verteilt.

Die Platzierung der $\delta'_x$-Funktonen im Netzwerk 200 kann manuell erfolgen, wenn das Netz 200 eine gewisse Stabilität aufweist, so dass die Events x stets aus derselben Sensordatenquelle 220 kommen.

Prinzipiell, nicht nur im Fall von Instabilitäten im Netzwerk 200, kann jedoch eine automatische Zuordnung der $\delta'_x$-Funktionen vorgenommen werden, die über das Publish/Subscribe-Protokoll erfolgen kann.

Ein Beispiel dafür ist das PADRES Publish/Subscribe System, das beispielsweise beschrieben ist in: https://www.researchgate.net/publication/220956222_The PADRES _Distributed_Publish Subscribe System.

Schritt S70: Funktionen der Netzwerkknoten 520

Die Grundidee besteht darin, dass die Zustände ebenfalls als spezielle Events definiert und mittels des Publikations/Abonnement-Protokolls (Publish-Subscribe) per Multicast an die Abonnenten (Subscriber) verteilt werden. Die Funktionen $\delta_x$, $x \in X$ bei den Knoten, $n_x$, 520, 540, 560 umfassen eine Startsequenz zur Initialisierung der Knoten, $n_x$, 520, 540, 560 und des in einer Event-Schleife (Loop) gestalteten Protokolls, das sowohl das Eintreffen von Zustands-Events als auch von Netzwerk-Events verarbeitet.

Das Publish-Subscribe-Protokoll umfasst die folgenden drei Nachrichten:

a) Bekanntmachen (advertise)(s,n): Der Netzwerkknoten, n, 520 macht den Zustand s in einer Broadcast-Nachricht allen anderen Netzwerknoten, n, 540, 560 bekannt. Diese Bekanntmachungs-Nachricht ist die einzige Broadcast-Nachricht in diesem Protokoll.

b) Abonnieren (subscribe) (n,s,m): Der Netzwerkknoten, n, 540, 560, wobei n $\in$ N, informiert den Knoten, m, 520, dass er den Zustand s von ihm abonniert. Dem sollte eine Bekanntmachungs-Nachricht (n,s) vorausgegangen sein. Die Abonnement-Nachricht ist eine Punkt-zu-Punkt-Nachricht (Point-to-Point) von einem Netzwerkknoten n zu einem anderen Netzwerkknoten m.

c) Publizieren (publish)(s,N): Alle Knoten, n $\in$ N, 520. 540, 560 werden mittels einer Multicast-Nachricht über den neuen Zustand s informiert. Die Knoten, n $\in$ N, 540, 560 sollten zuvor den Zustand s abonniert haben. Vor dem Senden einer Publikations-Nachricht sollte lokal ein Zustandsübergang stattgefunden haben.

Das Startverfahren des Knotens, n, 520 kann die folgenden Schritte umfassen:

Schritt 1: Zunächst ist die Menge der Abonnenten einer Zustandsänderung des Knotens $n_x$ die leere Menge: Abos:= Ø

Schritt 2: Für alle s $\in \delta_x( S )$ wird die Broadcast-Nachricht "Bekanntmachung von $(s,n_x)$" gesendet.

Die Zustandsänderungsfunktion $\delta_x( S )$ ist die Menge der lokal durch $\delta_x$ produzierten Folgezustände, also die Bildmenge von $\delta_x$. Diese Zustände werden allen anderen Knoten, n, 540, 560 bekanntgemacht.

Schritt 3: Für alle eingehenden Nachrichten von Netzwerkknoten n beim Netzwerkknoten $n_x$, 520 "Abonniere $(n,s,n_x)$": wenn $s \in \delta_x( S )$ verändert sich die Menge der Abonnenten z: Abos := Abos U { n }

Der Netzwerkknoten $n_x$, 520, speichert die Knoten, n, 540, 560, die die vom Netzwerkknoten $n_x$ bekanntgemachten Zustände abonnieren.

Schritt 4: Von den Netzwerkknoten n, 540, 560, bei denen die Nachricht "Bekanntmachen (s,n)" eingeht, wird die Nachricht "Abonniere $(n_x,s,n)$" an den Netzwerkknoten $n_x$ gesendet. Damit abonnieren diese Netzwerkknoten n den angebotenen Zustands-Event s.

Schritt 5: Die lokale Zustandsvariable z der Netzwerkknoten n nimmt den bekanntgemachten Startzustand $s_0$ ein.

Die einzelne Nachrichteneingänge oder -ausgänge werden gegebenenfalls mehrfach ausgeführt, in Abhängigkeit von der zeitlichen Abfolge, in welcher die Netzwerkknoten n, 520, 540, 560 das Startverfahren durchlaufen.

Eine Event-Schleife (Loop) des Knotens, $n_x$, 520 sieht wie folgt aus:

Schritt 1: Wenn eine Nachricht "Publiziere $(s,n_x)$" bei dem Netzwerkknoten $n_x$ eingeht, dann wird die lokale Zustandsvariable z des Netzwerkknotens $n_x$ auf s gesetzt: z:= s

Schritt 2: Wenn ein Event x bei dem Netzwerkknoten, $n_x$, 520 eingeht und $z \neq \delta_x( z )$, dann initiiert der Event x einen neuen Zustand: $z := \delta_x( z )$;

Der neuen Zustand z wird lokal bei dem Netzwerkknoten, $n_x$, 520 gespeichert. Dann wird von dem Netzwerkknoten, $n_x$, 520 eine Multicast-Nachricht an alle Abonnenten gesendet: "Publiziere (z, Abos)". Damit wird der neue Zustand z an alle Abonnenten (Abos) weitergegeben.

Die Schleife (loop) kann somit wie folgt beschreiben werden:

loop

Wenn Nachricht "publish( s, $n_x$)" eingeht: z := s; Wenn Event x eingeht und $z \neq \delta_x$ (z): sende Multicast-Nachricht "publish( z, Abos )";

end loop

In der Schleife werden eingehende Publikations-Nachrichten mit einem neuen Zustand verarbeitet, indem der publizierte Zustand in die lokale Zustandsvariable z übernommen wird. Ansonsten kann eine Zustandsänderung stattfinden, wenn ein Event gelesen wird. Der neue Zustand z wird an die anderen Netzwerkknoten n 540, 560, die die Zustandsänderungen abonniert haben, mittels einer Multicastnachricht weitergegeben. Falls der Event keine Zustandsänderungen zur Folge hat, findet auch keine Multicastnachricht statt.

Durch die vorliegende Erfindung kann somit eine Fehlerursachen-Analyse (Root Cause Analyse) von möglichen ursächlichen Fehlern in Ereignisketten (Eventfolgen) für ein Netzwerk 200 bestehend aus Netzwerkkomponenten 220, 240, 260 und Netzwercknoten 520, 540, 560 durchgeführt werden. Aus reduzierten Eventfolgen wird ein deterministischer Automat, $dA_i$, 900 konstruiert und eine Zustandsübergangsfunktion $\delta$ des Automaten, $dA_i$, 900 im Netzwerk 200 verteilt. Im Betrieb des Automaten, $dA_i$ 900 werden Zustände und Events gleichermaßen als Nachrichten definiert und mittels des Publikations/Abonnement-Protokolls (Publish/Subscribe) im Netzwerk 200 verteilt. Damit können gezielt Nachrichten über Fehlermeldungen in dem Netzwerk 200 weitergeben werden und eine Überlastung des Netzwerks 200 mit einer Datenflut, die keine Relevanz darstellt, kann vermieden werden.

**Patentansprüche**

1. Ein System (100) zur Fehlererkennung und Fehlerursachen-Analyse in einem Netzwerk (200) bestehend aus mehreren Netzwerkkomponenten (220, 240, 260, ... N) mit Softwaremodulen (300) und Kommunikationsschnittstellen (400) und Netzwerkknoten (520, 540, 560, ..., M), die mittels Kommunikationsverbindungen (500) mit den Netzwerkkomponenten (220, 240, 260, ...,N) verbunden sind, wobei die Netzwerkkomponenten (220, 240, 260, ..., N) und/oder die Netzwerkknoten (520, 540, 560, ..., M) ausgebildet sind, Daten zu generieren, die als eine Menge historischer Daten gespeichert werden, und aus der Menge historischer Daten Eventfolgen bestehend aus einer Abfolge von Events (a, b, c, d, e, f, g) zu bilden, wobei das System (100) ausgebildet ist,

   aus den Eventfolgen wiederum diejenigen Eventfolgen, die mit einem Alarm-Event (a) enden, zu extrahieren, aus den Eventfolgen mit einem Alarm-Event (a) wiederum relevante Events (a, b, c, d, e, f, g) bezogen auf eine Fehleranalyse zu extrahieren, und aus den relevanten Events (a, b, c, d, e, f, g) reduzierte Eventfolgen zu konstruieren, **dadurch gekennzeichnet, dass**
   das System (100) ausgebildet ist, zu jeder reduzierten Eventfolge einen Automaten (700) zum Erkennen dieser reduzierten Eventfolge zu konstruieren, und die zu jeder reduzierten Eventfolge konstruierten Automaten (700) sukzessive zu einem gemeinsamen Automaten (800) für alle reduzierten Eventfolgen zu vereinigen.

2. Das System (100) nach Anspruch 1, **dadurch gekennzeichnet, dass** das System (100) ausgebildet ist, den gemeinsamen Automaten (800) zu einem deterministischen Automaten (900) zu optimieren.

3. Das System (100) nach Anspruch 2, **dadurch gekennzeichnet, dass** das System (100) ausgebildet ist, eine Zustandsübergangsfunktion des deterministischen Automaten (900) zu zerlegen und in dem Netzwerk (200) zu verteilen.

4. Das System (100) nach Anspruch 3, **dadurch gekennzeichnet, dass** das System (100) dazu geeignet ist, ein Publikations/Abonnement-Protokoll an einen oder mehrere Netzwerkknoten (520, 540, 560) zu verteilen.

5. Ein Verfahren zur Fehlererkennung und Fehlerursachen-Analyse in einem Netzwerk (200) bestehend aus mehreren Netzwerkkomponenten (220, 240, 260, ... N) mit Softwaremodulen (300) und Kommunikationsschnittstellen (400) und Netzwerkknoten (520, 540, 560, ..., M), die mittels Kommunikationsverbindungen (500) mit den Netzwerkkomponenten (220, 240, 260, ..., N) verbunden sind, wobei die Netzwerkkomponenten (220, 240, 260, ..., N) und/oder die Netzwerkknoten (520, 540, 560, ..., M) Daten generieren, die als eine Menge historischer Daten gespeichert werden, und aus der Menge historischer Daten allgemeine Eventfolgen bestehend aus einer Abfolge von Events (a, b, c, d, e, f, g) bilden, umfassend:

   - Extrahieren (S10) derjenigen Eventfolgen aus den allgemeinen Eventfolgen, die mit einem Alarm-Event (a) enden,
   - Extrahieren (S20) von relevanten Events für eine Fehleranalyse aus den Eventfolgen, die mit einem Alarm-Event (a) enden, und Konstruieren von reduzierten Eventfolgen bestehend aus den relevanten Events,

   **gekennzeichnet durch**

   - Konstruieren (S30) eines Automaten (700) zu jeder reduzierten Eventfolge zum Erkennen dieser reduzierten Eventfolge,
   - wobei die konstruierten Automaten (700) sukzessive zu einem gemeinsamen Automaten (800) für alle reduzierten Eventfolgen vereinigt werden.

**6.** Das Verfahren (100) nach Anspruch 5, **dadurch gekennzeichnet, dass** der gemeinsame Automat (800) zu einem deterministischen Automaten (900) optimiert wird.

**7.** Das Verfahren nach Anspruch 6, **dadurch gekennzeichnet, dass** eine Zustandsübergangsfunktion ($\delta$) des deterministischen Automaten (900) zerlegt und in dem Netzwerk (200) verteilt wird.

**8.** Das Verfahren nach Anspruch 7, **dadurch gekennzeichnet**, ein Publikations/Abonnement-Protokoll an einen oder mehrere Netzwerkknoten (520, 540, 560) verteilt wird.

**9.** Ein Computerprogrammprodukt, das einen und/der mehrere ausführbare Computercodes enthält zur Ausführung des Verfahrens nach einem oder mehreren der Ansprüche 5 bis 8.

**Claims**

**1.** A system (100) for fault detection and root cause analysis in a network (200) comprising a plurality of network components (220, 240, 260, ... N) with software modules (300) and communication interfaces (400) and network nodes (520, 540, 560, ..., M) which are connected to the network components (220, 240, 260, ..., N) by means of communication connections (500), wherein the network components (220, 240, 260, ..., N) and/or the network nodes (520, 540, 560, ..., M) are designed to generate data stored as a set of historical data and to form event sequences comprising a sequence of events (a, b, c, d, e, f, g) from the set of historical data, wherein the system (100) is designed

to in turn extract those event sequences which end with an alarm event (a) from the event sequences, to in turn extract relevant events (a, b, c, d, e, f, g) based on a fault analysis from the event sequences with an alarm event (a) and to construct reduced event sequences from the relevant events (a, b, c, d, e, f, g), **characterized in that** the system (100) is designed to construct, for each reduced event sequence, an automaton (700) for detecting this reduced event sequence, and to gradually combine the automatons (700) constructed for each reduced event sequence to form a common automaton (800) for all reduced event sequences.

**2.** The system (100) according to Claim 1, **characterized in that** the system (100) is designed to optimize the common automaton (800) to form a deterministic automaton (900).

**3.** The system (100) according to Claim 2, **characterized in that** the system (100) is designed to break down a state transition function of the deterministic automaton (900) and to distribute it in the network (200).

**4.** The system (100) according to Claim 3, **characterized in that** the system (100) is suitable for distributing a publish/subscribe protocol to one or more network nodes (520, 540, 560).

**5.** A method for fault detection and root cause analysis in a network (200) comprising a plurality of network components (220, 240, 260, ... N) with software modules (300) and communication interfaces (400) and network nodes (520, 540, 560, ..., M) which are connected to the network components (220, 240, 260, ..., N) by means of communication connections (500), wherein the network components (220, 240, 260, ..., N) and/or the network nodes (520, 540, 560, ..., M) generate data stored as a set of historical data and form general event sequences comprising a sequence of events (a, b, c, d, e, f, g) from the set of historical data, comprising:

- extracting (S10) those event sequences which end with an alarm event (a) from the general event sequences,
- extracting (S20) relevant events for a fault analysis from the event sequences which end with an alarm event (a) and constructing reduced event sequences comprising the relevant events,

**characterized by**

- constructing (S30), for each reduced event sequence, an automaton (700) for detecting this reduced event sequence,
- wherein the constructed automatons (700) are gradually combined to form a common automaton (800) for all reduced event sequences.

**6.** The method (100) according to Claim 5, **characterized in that** the common automaton (800) is optimized to form a deterministic automaton (900).

7. The method according to Claim 6, **characterized in that** a state transition function (δ) of the deterministic automaton (900) is broken down and is distributed in the network (200).

8. The method according to Claim 7, **characterized in that** a publish/subscribe protocol is distributed to one or more network nodes (520, 540, 560).

9. A computer program product containing one and/or more executable computer codes for carrying out the method according to one or more of Claims 5 to 8.


**Revendications**

1. Système (100) de reconnaissance d'erreur et d'analyse des causes d'erreur dans un réseau (200) composé de plusieurs composantes de réseau (220, 240, 260, ..., N) avec des modules logiciels (300) et des interfaces de communication (400) et des nœuds de réseau (520, 540, 560, ..., M) qui sont reliés aux composantes de réseau (220, 240, 260, ..., N) au moyen de liaisons de communication (500), dans lequel les composantes de réseau (220, 240, 260, ..., N) et/ou les nœuds de réseau (520, 540, 560, ..., M) sont conçus pour générer des données qui sont enregistrées en tant qu'une quantité de données historiques, et pour former à partir de la quantité de données historiques, des séquences d'événements se composant d'une suite d'événements (a, b, c, d, e, f, g), dans lequel le système (100) est conçu,

pour extraire, à partir des séquences d'événements, de nouveau les séquences d'événements qui se terminent avec un événement d'alarme (a),
pour extraire de nouveau à partir des séquences d'événements avec un événement d'alarme (a), des événements pertinents (a, b, c, d, e, f, g) rapportés à une analyse d'erreur, et pour construire des séquences d'événements réduites à partir des événements pertinents (a, b, c, d, e, f, g), **caractérisé en ce que**
le système (100) est conçu pour construire à chaque séquence d'événements réduite, un automate (700) pour reconnaître cette séquence d'événements réduite et pour réunir les automates (700) construits à chaque séquence d'événements réduite successivement en un automate commun (800) pour toutes les séquences d'événements réduites.

2. Système (100) selon la revendication 1, **caractérisé en ce que** le système (100) est conçu pour optimiser l'automate commun (800) en un automate déterministe (900).

3. Système (100) selon la revendication 2, **caractérisé en ce que** le système (100) est conçu pour décomposer une fonction de transition d'états de l'automate déterministe (900) et la répartir dans le réseau (200).

4. Système (100) selon la revendication 3, **caractérisé en ce que** le système (100) est approprié pour répartir un protocole de publication/abonnement sur un ou plusieurs nœuds de réseau (520, 540, 560).

5. Procédé de reconnaissance d'erreur et d'analyse des causes d'erreur dans un réseau (200) composé de plusieurs composantes de réseau (220, 240, 260, ..., N) avec des modules logiciels (300) et des interfaces de communication (400) et des nœuds de réseau (520, 540, 560, ..., M) qui sont reliés aux composantes de réseau (220, 240, 260, ..., N) au moyen de liaisons de communication (500), dans lequel les composantes de réseau (220, 240, 260, ..., N) et/ou les nœuds de réseau (520, 540, 560, ..., M) génèrent des données qui sont enregistrées en tant qu'une quantité de données historiques, et forment à partir de la quantité de données historiques, des séquences d'événements générales se composant d'une suite d'événements (a, b, c, d, e, f, g), comprenant :

- d'extraire (S10), à partir des séquences d'événements, les séquences d'événements qui se terminent avec un événement d'alarme (a),
- d'extraire (S20) des événements pertinents pour une analyse d'erreur à partir des séquences d'événements qui se terminent avec un événement d'alarme (a) et de construire des séquences d'événements réduites composées des événements pertinents, **caractérisé par** le fait
- de construire (S30) un automate (700) à chaque séquence d'événements réduite pour reconnaître cette séquence d'événements réduite
- dans lequel les automates (700) construits sont réunis successivement en un automate commun (800) pour

EP 3 861 681 B1

toutes les séquences d'événements réduites.

6. Procédé selon la revendication 5, **caractérisé en ce que** l'automate commun (800) est optimisé en un automate déterministe (900).

7. Procédé selon la revendication 6, **caractérisé en ce qu'**une fonction de transition d'états ($\delta$) de l'automate déterministe (900) est décomposée et répartie dans le réseau (200) .

8. Procédé selon la revendication 7, **caractérisé en ce qu'**un protocole de publication/abonnement est réparti sur un ou plusieurs nœuds de réseau (520, 540, 560).

9. Produit de programme informatique qui contient un ou plusieurs codes exécutables pour exécuter le procédé selon l'une ou plusieurs des revendications 5 à 8.

FIG 1

FIG 2

FIG 3

FIG 4

FIG 5

900

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017118092 A1
- US 2012124353 A1